# EUROPÄISCHE PATENTSCHRIFT

(11) **EP 0 442 882 B1**
(45) Veröffentlichungstag und Bekanntmachung des Hinweises auf die Patenterteilung: **04.08.1993**
(21) Anmeldenummer: 89905686.5
(22) Anmeldetag: 20.05.1989
(51) Int. Cl.: B66D 1/22, F16H 1/46

(54) **HEBEZEUGANTRIEB**
DRIVE FOR LIFTING EQUIPMENT
ENTRAINEMENT POUR TREUIL

(30) Priorität: 28.05.1988 DE 3818153
(43) Veröffentlichungstag der Anmeldung: 28.08.1991
(73) Patentinhaber: ZF FRIEDRICHSHAFEN Aktiengesellschaft, 88038 Friedrichshafen (DE)
(72) Erfinder: MANN, Egon, D-7990 Friedrichshafen (DE); MEISNINGER, Erwin, D-8395 Hauzenberg (DE)
(86) Internationale Anmeldenummer: EP8900556
(87) Internationale Veröffentlichungsnummer: WO8911436

(56) Entgegenhaltungen:
- FR-A- 1 516 473
- FR-A- 2 169 429
- GB-A- 2 102 096

## Beschreibung

Die Erfindung betrifft einen Hebezeugantrieb mit einer Bremse und einem Motor, der über eine Antriebswelle ein Sonnenrad eines Eingangsplanetensatzes eines mehrstufigen Planetengetriebes antreibt. Ein Planetenträger des Eingangsplanetensatzes ist drehfest mit einem Sonnenrad eines zweiten Planetensatzes verbunden, während Hohlräder des Eingangsplanetensatzes und des zweiten Planetensatzes mit einem Gehäusemantel verbunden sind. Dieser ist über Lager drehbar auf einem ortsfest gehaltenen Planetenträger des zweiten Planetensatzes gelagert.

Ein derartiger Hebezeugantrieb ist zum Antrieb einer Trommelwinde bekannt (DE-GM 75 16 081). Solche Trommelwindenantriebe genügen in der Regel nicht den erhöhten Anforderungen bezüglich geringer Geräuschemission, insbesondere, wenn die Hebezeuge für Aufzüge in bewohnten Gebäuden, z. B. in Wohn-, Bürogebäuden und Krankenhäusern, verwendet werden sollen.

Der Erfindung liegt daher die Aufgabe zugrunde, unter Wahrung des günstigen Wirkungsgrades die Geräuschemission eines Hebezeugantriebes der eingangs beschriebenen Art zu verbessern und trotzdem den baulichen Aufwand gering zu halten. Erfindungsgemäß wird diese Aufgabe dadurch gelöst, daß der Eingangsplanetensatz schrägverzahnt und der zweite Planetensatz geradverzahnt ist, daß die Antriebswelle zwischen dem Sonnenrad des Eingangsplanetensatzes und der Bremse, die zwischen dem Motor und dem Planetengetriebe angeordnet ist, durch eine Kupplung mit Längsausgleich unterteilt ist und das sonnenradseitige Antriebswellenstück über ein Festkugellager im Planetenträger des zweiten Planetensatzes gelagert ist.

Die Schrägverzahnung des Eingangsplanetensatzes reduziert die Laufgeräusche, die vor allem in dieser Getriebestufe mit der hohen Drehzahl und den kleinen Drehmomenten auftreten. Infolge der kleinen Momente treten durch die Schrägverzahnung keine großen Axialschübe an der Eingangswelle bzw. an dem Hohlrad auf, so daß die axiale Lagerung einfach gestaltet werden kann. Der zweite Planetensatz erzeugt aufgrund des geringeren Drehzahlniveaus nur geringe Laufgeräusche, so daS der Unterschied zwischen einer aufwendigeren Schrägverzahnung und der einfacheren Geradverzahnung geräuschmäßig nicht ins Gewicht fällt. Die Geradverzahnung erzeugt keinen Axialschub und erfordert somit keine besondere axiale Abstützung.

Der Vorteil kann gemäß einer Ausgestaltung noch dadurch vergrößert werden, daS nur die Zahnräder des zweiten Planetensatzes durch eine Wärmebehandlung bei höheren Temperaturen, z. B. Härten, nachbehandelt sind. Der Eingangsplanetensatz muß allenfalls bei niedrigeren Temperaturen nachbehandelt werden. Dadurch treten im Eingangsplanetensatz geringere Verzüge auf, die ohne Nacharbeit zu einer höheren Präzision und daher einer größeren Laufruhe führen. Gleichzeitig ist nur ein geringer Fertigungsaufwand erforderlich. Der zweite Planetensatz ist geradverzahnt. Die Fertigungsungenauigkeiten im langsam laufenden zweiten Planetensatz verursachen nur geringe Emissionsgeräusche, die durch geringfügige mechanische Nacharbeiten noch verringert werden können.

Die Kupplung mit Längenausgleich in der Antriebswelle verhindert, daß Schwingungen vom Antrieb oder von der Bremse auf das Planetengetriebe übertragen werden und dort möglicherweise Resonanzschwingungen mit Geräuschemissionen erzeugen. Dabei ist der sonnenradseitige Teil der Antriebswelle über ein Festkugellager im Planetenträger des zweiten Planetensatzes gelagert. Das radiale Lagerspiel kann dem notwendigen Bewegungsraum des Sonnenrades angepaßt werden. Das Eingangssonnenrad kann sich innerhalb des Lagerspiels und durch Verschwenken innerhalb des Kupplungsspiels frei zwischen den Planetenrädern einstellen. Es ist dadurch ein guter Lastausgleich mit guter Laufruhe gewährleistet, selbst wenn zur Erzielung eines großen Übersetzungsverhältnisses das Sonnenrad einteilig mit der Antriebswelle ausgebildet ist. Die Anpassungsfähigkeit des Eingangssonnenrades ist deshalb von besonderer Bedeutung, da der Planetenträger des Eingangsplanetensatzes sich nur axial über Radialkugellager am gehäusefesten Planetenträger des zweiten Planetensatzes abstützt, wobei zur Vermeidung von Geräuschen die Axiallager zweckmäßigerweise unter Federvorspannung stehen. Der Planetenträger des Eingangsplanetensatzes wird daher radial vom Sonnenrad des zweiten Planetensatzes und vom Hohlrad des Eingangsplanetensatzes geführt und wird somit infolge der Fertigungsungenauigkeiten selten die vorausberechnete Stellung einnehmen.

Durch eine präzise und kräftige Lagerung des Gehäusemantels, bei der Kippmomente weitgehend vermieden sind, wird verhindert, daS von der Last herrührende Störkräfte und -momente den Antrieb zu geräuschemittierenden Schwingungen anregt. Die Lagerung nimmt gleichzeitig die axialen Schubkräfte von dem Hohlrad des Eingangsplanetensatzes auf.

Gemäß einer weiteren Ausgestaltung der Erfindung wird vorgeschlagen, daß die Bremse als trockene Scheibenbremse ausgebildet ist, die in einem separaten, als Ständer dienenden Bremsgehäuse angeordnet ist, an das an der einen Stirnseite der Motor und an der anderen Stirnfläche das Planetengetriebe mit dem Planetenträger des zweiten Planetensatzes angeflanscht ist und das zwischen der Bremse und dem Planetengetriebe eine Stützwand aufweist, in der das bremsseitige Antriebswellenstück axialfest gelagert ist, wobei die Wellendurchführung durch eine Dichtung abgedichtet ist. Durch die separate Lagerung der Bremsscheibe und axiale Abkopplung vom Getriebe und vom Motor wird verhindert, daß möglicherweise auftretende Bremsschwingungen durch Unebenheiten der Bremsscheibe oder Unwuchten sich auf den übrigen Antriebsstrang übertragen. Dabei wird die Montage und der einfache Aufbau dadurch gefördert, daß die Antriebswelle dreigeteilt ist und das mittlere Teil durch ein Mitnahmeprofil mit dem sonnenradseitigen Teil verbunden ist und mittels eines Flansches am Bremsscheibenträger angeflanscht ist, der eine Kupplung zum motorseitigen Teil bildet.

Die Ansprüche enthalten eine sinnvolle Kombination der Lösungsmerkmale, allerdings sind für den Fachmann im Rahmen der Erfindung weitere Kombinationen ohne weiteres möglich, dies insbesondere, wenn er unter gegebenen Bedingungen jeweils dem Bauaufwand, der Montagefähigkeit oder dem Geräuschverhalten eine größere Bedeutung beimißt.

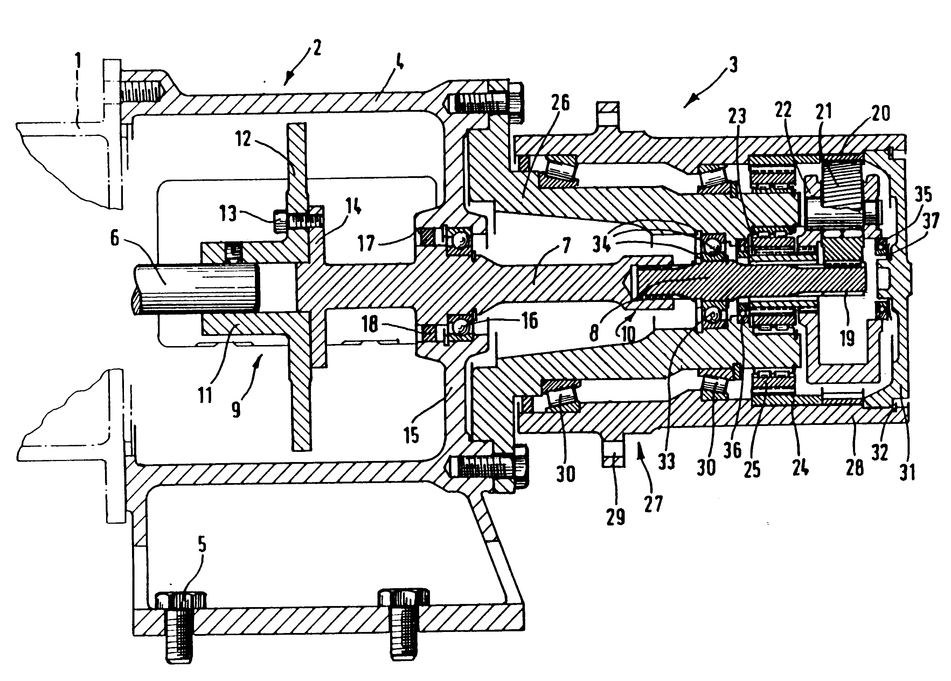

In der Zeichnung ist ein Ausführungsbeispiel der Erfindung dargestellt.

Die Figur zeigt einen teilweisen Längsschnitt durch einen erfindungsgemäßen Hebezeugantrieb, soweit es zum Verständnis der Erfindung notwendig ist.

Der erfindungsgemäße Hebezeugantrieb besteht im wesentlichen aus einem Motor 1, in der Regel einem Elektromotor, einer Bremse 2 und einem Planetengetriebe 3. Ein Bremsgehäuse 4 ist gleichzeitig als Ständer ausgebildet und wird mittels Schrauben 5 befestigt. An das Bremsgehäuse 4 sind an gegenüberliegenden Stirnseiten der Motor 1 bzw. das Planetengetriebe 3 angeflanscht. Eine durch das Bremsgehäuse 4 hindurchgeführte Antriebswelle besteht aus drei Teilen 6, 7 und 8, die durch Kupplungen 9 und 10 miteinander verbunden sind. Die Kupplung 9 wird von einem Bremsscheibenträger 11 gebildet, an den eine Bremsscheibe 12 einstückig angeformt ist. Der Bremsscheibenträger ist mittels Schrauben 13 an einen Flansch 14 des mittleren Teiles 7 der Antriebswelle angeflanscht. Die Bremsscheibe wirkt zusammen mit nicht näher dargestellten Bremsschuhen und Betätigungsgliedern, die im Bremsgehäuse befestigt sind.

Das Bremsgehäuse 4 weist getriebeseitig eine Stützwand 15 auf, in der der mittlere Teil 7 der Antriebswelle axialfest mittels eines Radialkugellagers 16 gelagert ist. Die Lagerbohrung 17 ist zur Bremsscheibe 12 hin durch eine Wellendichtung 18 abgedichtet.

Das Planetengetriebe 3 ist zweistufig, wobei ein Eingangsplanetensatz von einem Sonnenrad 19, einem Hohlrad 20 und Planeten 21, die in einem Planetenträger 22 gelagert sind, gebildet wird, während ein zweiter Planetensatz mit einem Sonnenrad 23, einem Hohlrad 24 und Planeten 25 eine zweite Planetenstufe bildet.

Die Planeten 25 sind auf einem Planetenträger 26 gelagert, der gleichzeitig einen stirnseitigen Abschluß eines Getriebegehäuses 27 bildet und an das Bremsgehäuse 4 angeflanscht ist. Ein Gehäusemantel 28 eines Getriebegehäuses 27 hat einen Befestigungsflansch 29 für ein nicht näher dargestelltes Hebezeug, z. B. eine Seilscheibe. Der Befestigungsflansch 29 liegt axial zwischen zwei Kegelrollenlagern 30 und 31 des Gehäusemantels 28. In dem Gehäusemantel 28 sind die Hohlräder 20 und 24 befestigt. Ein Deckel 31, der von einem Sprengring 32 im Gehäusemantel 28 gehalten wird, verschließt den Gehäusemantel 28 an seiner freien Stirnseite.

Das äußere Teil 8 der Antriebswelle ist mittels eines Kugellagers 33, das durch Sprengringe 34 axial festgelegt ist, im Planetenträger 26 gelagert. An das äußere Teil 7 der Antriebswelle ist das Sonnenrad 19 einstückig angeformt. Es kann sich innerhalb des Lagerspiels des Kugellagers 33 und innerhalb des freien Schwenkwinkels des äußeren Teiles 8 der Antriebswelle frei zwischen den Planeten 21 des Eingangsplanetensatzes einstellen. Der Planetenträger 22 des Eingangsplanetensatzes ist mit dem Sonnenrad 23 des zweiten Planetensatzes verbunden und stützt sich über Kugellager axial sowohl am Deckel 31 als auch über das Sonnenrad 23 am Planetenträger 26 des zweiten Planetensatzes ab. Um eine axiale Vorspannung zu erzeugen, ist zwischen dem Deckel 31 und dem Kugellager 35 eine Tellerfeder 37 eingefügt.

Während der zweite Planetensatz geradverzahnt ist und für die Aufnahme hoher Kräfte und Momente einer entsprechenden Wärmebehandlung unterzogen wurden, sind die Zahnräder des Eingangsplanetensatzes schrägverzahnt und äußerst präzise gefertigt, wobei zur Vermeidung von Verzügen auf eine Wärmebehandlung verzichtet werden kann oder die Wärmebehandlung nur bei geringen Temperaturen erfolgt. Die dadurch erzielte hohe Genauigkeit ergibt eine große Laufruhe des Eingangsplanetensatzes trotz der hohen Drehzahlen, während die hohen Momente im zweiten Planetensatz gut ertragen werden, ohne daß zusätzliche axiale Kräfte erzeugt werden.

| Bezugszeichen | | | |
|---|---|---|---|
| 1 | Motor | 35 | Kugellager |
| 2 | Bremse | 36 | Kugellager |
| 3 | Planetengetriebe | 37 | Tellerfeder |
| 4 | Bremsgehäuse | | |
| 5 | Schrauben | | |
| 6 | Antriebswelle | | |
| 7 | Antriebswelle | | |
| 8 | Antriebswelle | | |
| 9 | Kupplung | | |
| 10 | Kupplung | | |
| 11 | Bremsscheibenträger | | |
| 12 | Bremsscheibe | | |
| 13 | Schraube | | |
| 14 | Flansch | | |
| 15 | Stützwand | | |
| 16 | Radialkugellager | | |
| 17 | Lagerbohrung | | |
| 18 | Wellendichtung | | |
| 19 | Sonnenrad | | |
| 20 | Hohlrad | | |
| 21 | Planeten | | |
| 22 | Planetenträger | | |
| 23 | Sonnenrad | | |
| 24 | Hohlrad | | |
| 25 | Planeten | | |
| 26 | Planetenträger | | |
| 27 | Getriebegehäuse | | |
| 28 | Gehäusemantel | | |
| 29 | Befestigungsflansch | | |
| 30 | Kegelrollenlager | | |
| 31 | Deckel | | |
| 32 | Sprengring | | |
| 33 | Kugellager | | |
| 34 | Sprengring | | |

## Patentansprüche

1. Hebezeugantrieb mit einer Bremse (2) und einem Motor (1), der über eine Antriebswelle (6, 7, 8) ein Sonnenrad (19) eines Eingangsplanetensatzes (19, 20, 21) eines mehrstufigen Planetengetriebes (3) antreibt, wobei ein Planetenträger (22) des Eingangsplanetensatzes mit einem Sonnenrad (23) eines zweiten Planetensatzes (23, 24, 25) drehfest verbunden ist und Hohlräder (20, 24) des Eingangsplanetsatzes und des zweiten Planetensatzes mit einem Gehäusemantel (28) verbunden sind, der über Lager (30) drehbar auf einem ortsfest gehaltenen Planetenträger (26) des zweiten Planetensatzes gelagert ist, dadurch **gekennzeichnet,** daß der Eingangsplanetensatz (19, 20, 21) schrägverzahnt und der zweite Planetensatz (23, 24, 25) geradverzahnt ist, daß die Antriebswelle (6, 7, 8) zwischen dem Sonnenrad (19) des Eingangsplanetensatzes (19, 20, 21) und der Bremse (2) durch eine Kupplung (10) mit Längsausgleich unterteilt ist und das sonnenradseitige Antriebswellenstück (8) über ein axial festgelegtes Kugellager (33) im Planetenträger (26) des zweiten Planetensatzes gelagert ist.

2. Hebezeugantrieb nach Anspruch 1, dadurch **gekennzeichnet,** daß das Hebezeug an einem Befestigungsflansch (29) des Gehäusemantels (28) lösbar befestigt ist, der zwischen den als Kegelrollenlager (30) ausgebildeten Lagern für den Gehäusemantel (28) angeordnet ist.

3. Hebezeugantrieb nach Anspruch 1, dadurch **gekennzeichnet,** daß das Hebezeug eine einstückig an den Gehäusemantel (28) angeformte Seilscheibe ist.

4. Hebezeugantrieb nach Anspruch 1, dadurch **gekennzeichnet,** daß nur die Zahnräder (23, 24, 25) des zweiten Planetensatzes durch eine Wärmebehandlung bei höheren Temperaturen nachbehandelt sind.

5. Hebezeugantrieb nach einem der vorangehenden Ansprüche, dadurch **gekennzeichnet,** daß der Planetenträger (22) des Eingangsplanetensatzes sich axial über ein Radialkugellager (35) an einen Deckel (31) und das Sonnenrad (23) des zweiten Planetensatzes sich axial über ein weiteres Radialkugellager (36) am Planetenträger (26) abstützt.

6. Hebezeugantrieb nach dem vorangehenden Anspruch, dadurch **gekennzeichnet,** daß die als Axiallager wirkenden Radialkugellager unter Federvorspannung stehen.

7. Hebezeugantrieb nach einem der vorangehenden Ansprüche, dadurch **gekennzeichnet,** daß die Bremse (2) als trockene Scheibenbremse ausgebildet ist, die in einem separaten, als Ständer dienenden Bremsgehäuse (4) angeordnet ist, an das an der einen Stirnfläche der Motor (1) und an der anderen Stirnfläche das Planetengetriebe (2) mit dem Planetenträger (26) des zweiten Planetensatzes angeflanscht ist und das zwischen der Bremsscheibe (12) und dem Planetengetriebe (3) eine Stützwand (15) aufweist, in der das bremsseitige Antriebswellenstück (7) axialfest gelagert ist, wobei die Lagerbohrung (17) durch eine Wellendichtung (18) abgedichtet ist.

8. Hebezeugantrieb nach Anspruch 7, dadurch **gekennzeichnet,** daß die Antriebswelle dreigeteilt ist, das mittlere Teil (7) durch ein Mitnahmeprofil mit dem sonnenradseitigen Teil (8) verbunden ist und mittels eines Flansches (14) am Bremsscheibenträger (11) angeflanscht ist, der eine Kupplung (9) zum motorseitigen Teil (6) bildet.

## Claims

1. Hoisting-gear drive, having a brake (2) and a motor (1) which, via a drive shaft (6, 7, 8), drives a sun wheel (19) of an input planet set (19, 20, 21) of a multi-step planetary gearing (3), with one planet carrier (22) of the input planet set being connected in a torsion-resistant manner to a sun wheel (23) of a second planet set (23, 24, 25) and ring gears (20, 24) of the input planet set and the second planet set being connected to a housing shell (28) which is supported via bearing (30) rotatably on a planet carrier (26), which is held stationary, of the second planet set, characterized in that the input planet set (19, 20, 21) is helical-toothed and the second planet set (23, 24, 25) is straight-toothed, that the drive shaft (6, 7, 8) between the sun wheel (19) of the input planet set (19, 20, 21) and the brake (2) is subdivided by a coupling (10) with longitudinal equalization and the drive shaft piece (8) on the sun wheel side is supported via an axially fixed ball bearing (33) in the planet carrier (26) of the second planet set.

2. Hoisting-gear drive according to claim 1, characterized in that the hoisting gear is detachably fastened to a mounting flange (29) of the housing shell (28) which is disposed between the bearings in the form of tapered-roller bearings (30) for the housing shell (28).

3. Hoisting-gear drive according to claim 1, characterized in that the hoisting gear is a rope pulley integrally formed on the housing shell (28).

4. Hoisting-gear drive according to claim 1, characterized in that only the gear wheels (23, 24, 25) of the second planet set are subjected to subsequent heat treatment at higher temperatures.

5. Hoisting-gear drive according to one of the preceding claims, characterized in that the planet carrier (22) of the input planet set is axially supported via a radial ball bearing (35) on a cover (31) and the sun wheel (23) of the second planet set is axially supported via a further radial ball bearing (36) on the planet carrier (26).

6. Hoisting-gear drive according to the preceding claim, characterized in that the radial ball bearings acting as thrust bearings are spring-biased.

7. Hoisting-gear drive according to one of the preceding claims, characterized in that the brake (2) takes the form of a dry disk brake which is disposed in a separate brake housing (4) serving as a stand, onto which at one end face the motor (1) and at the other end face the planetary gearing (2) with the planet carrier (26) of the second planet set is flange-mounted and which has, between the brake disk (12) and the planetary gearing (3), a support wall (15) in which the drive shaft piece (7) on the brake side is supported in an axially fixed manner, the bearing bore (17) being sealed off by a shaft seal (18).

8. Hoisting-gear drive according to claim 7, characterized in that the drive shaft is divided into three parts, the middle part (7) being connected by a coupling profile to the part (8) on the sun wheel side and being flange-mounted with the aid of a flange (14) on the brake disk carrier (11), which forms a coupling (9) to the part (6) on the motor side.

## Revendications

1. Entraînement de treuil comportant un frein (2) et un moteur (1) qui entraîne au moyen d'un arbre d' entraînement (6, 7, 8), un pignon planétaire (19) d'un train planétaire d'entrée (19, 20, 21) d'un engrenage planétaire à plusieurs étages (3), où un porte-satellites (22) du train planétaire d'entrée est solidaire en rotation d'un pignon planétaire (23) d'un second train planétaire (23, 24, 25) et où dès couronnes à denture intérieure (20, 24) du train planétaire d'entrée et du second train planétaire sont fixées à un carter (28) qui est monté de manière rotative au moyen de paliers (30) sur un porte-satellites fixe (26) du second train planétaire, **caractérisé** en ce que le train planétaire d'entrée (19, 20, 21) est à denture hélicoïdale et le second train planétaire (23, 24, 25) est à denture droite, en ce que l'arbre d'entraînement (6, 7, 8) est divisé par un accouplement (10) à compensation longitudinale entre le pignon planétaire (19) du train planétaire d'entrée (19, 20, 21) et le frein (2) et en ce que le tronçon d'arbre d' entraînement (8) situé du côté dudit pignon planétaire est monté dans le porte-satellites (26) du second train planétaire au moyen d'un roulement à billes (33) fixé axialement.

2. Entraînement de treuil selon la revendication 1, **caractérisé** en ce que le treuil est fixé de manière amovible à un flasque (29) du carter (28) ce flasque étant disposé entre les paliers du carter (28) constitués par des roulements à rouleaux coniques (30).

3. Entraînement de treuil selon la revendication 1, **caractérisé** en ce que le treuil est constitué par une poulie à câble faite d'une pièce avec le carter (28).

4. Entraînement de treuil selon la revendication 1, **caractérisé** en ce que seules les roues dentées (23, 24, 25) du second train planétaire sont traitées thermiquement à haute température.

5. Entraînement de treuil selon l'une des revendications précédentes, **caractérisé** en ce que le porte-satellites (22) du train planétaire d'entrée s'appuie axialement contre un couvercle (31) par un roulement à billes radial (35) et le pignon planétaire (23) du second train planétaire s'appuie axialement contre le porte-satellites (26) par un autre roulement à billes radial (36).

6. Entraînement de treuil selon la revendication précédente, **caractérisé** en ce que les roulements à billes radiaux servant de paliers axiaux sont préchargés élastiquement.

7. Entraînement de treuil selon l'une des revendications précédentes, **caractérisé** en ce que le frein (2) est un frein à disque sec, disposé dans un carter de frein (4) séparé servant de support, dont une première face frontale est raccordée au moteur (1) et l'autre face frontale est raccordée à l'engrenage planétaire (2) par le porte-satellites (26) du second train planétaire le carter de frein comportant, entre le disque de frein (12) et l'engrenage planétaire (3), une paroi porteuse (15) dans laquelle le tronçon d'arbre d'entraînement (7) situé du côté du frein, est monté sur un palier de manière fixe axialement, dans un alésage de palier (17) pourvu d'un joint d'étanchéité d'arbre (18).

8. Entraînement de treuil selon la revendication 7, **caractérisé** en ce que l'arbre d'entraînement est divisé en trois tronçons dont le tronçon médian (7) est raccordé par un profil d' entraînement au tronçon (8) situé du côté du pignon planétaire et est fixé au moyen d'un flasque (14) au porte-disque (11) du frein, le porte-disque formant un accouplement (9) au tronçon (6) situé du côté du moteur.
